# EUROPÄISCHE PATENTSCHRIFT

(11) **EP 3 846 510 B1**
(45) Veröffentlichungstag und Bekanntmachung des Hinweises auf die Patenterteilung: **09.07.2025**
(21) Anmeldenummer: 20215932.3
(22) Anmeldetag: 21.12.2020
(51) Int. Cl.: H04W 4/40, A47G 29/14, G06Q 10/08

(54) **VERFAHREN ZUM BEREITHALTEN VON ABZUHOLENDEN STÜCKGÜTERN UND/ODER ZUM SAMMELN VON ABZUGEBENDEN STÜCKGÜTERN**
PROCEDURE FOR HOLDING GENERAL GOODS TO BE COLLECTED AND/OR FOR COLLECTING GENERAL GOODS TO BE DISPENSED
PROCÉDÉ DE PRÉPARATION DES MARCHANDISES À RAMASSER ET/OU DE COLLECTE DES MARCHANDISES À DISTRIBUER

(30) Priorität: 30.12.2019 DE 102019135888
(43) Veröffentlichungstag der Anmeldung: 07.07.2021
(73) Patentinhaber: Deutsche Post AG, 53113 Bonn (DE)
(72) Erfinder: Vorwerk, Felix, 53173 Bonn (DE); Pruski, Matthäus, 53844 Troisdorf (DE)
(74) Vertreter: Cohausz & Florack

(56) Entgegenhaltungen:
- WO-A2-2014/080389
- US-A1- 2016 033 966
- US-A1- 2016 235 236
- US-A1- 2018 261 112
- US-A1- 2019 347 942

## Beschreibung

Die Erfindung betrifft ein Verfahren zum Bereithalten von abzuholenden Stückgütern und/oder zum Sammeln von abzugebenden Stückgütern mit wenigstens einem eine Mehrzahl von separaten Stückgutfächern aufweisenden Stückgutmodul an einem Abholort, wobei die Stückgutfächer jeweils eine von einer den Zugriff in das Stückgutfach verhindernde Verschlussstellung in eine den Zugriff auf das Stückgutfach freigebende Öffnungsstellung und zurück verstellbaren Verschlusseinrichtung aufweisen.

Es sind bereits Stückgutschränke mit einem Stückgutmodul oder mit mehreren Stückgutmodulen jeweils umfassend Stückgutfächer zur Aufnahme von Stückgütern bekannt. Die Stückgutmodule können dabei integraler Bestandteil der Stückgutschränke sein, so dass die Stückgutmodule nicht oder wenigstens nicht ohne eine nachhaltige Beschädigung des Stückgutmoduls und/oder des Stückgutschranks von dem Stückgutschrank getrennt werden können. Alternativ können die Stückgutmodule mit den Stückgutschränken aber auch lösbar verbunden sein, so dass die Stückgutmodule separat von den Stückgutschränken gehandhabt und die Stückgutmodule von Stückgutschränken durch andere Stückgutmodule ersetzt bzw. ausgetauscht werden können.

Die Stückgutfächer weisen typischerweise Verschlusseinheiten in Form von Türen oder Klappen auf, die zwischen einer Verschlussstellung und einer Öffnungsstellung verstellt werden können. In der Verschlussstellung kann sichergestellt werden, dass unbefugte Personen keinen Zugriff auf ein Stückgut im Stückgutfach erlangen. In der Öffnungsstellung können berechtigte Personen dagegen Stückgüter in das Stückgutfach einlegen oder aus dem Stückgutfach entnehmen.

Um die Bedienung des Stückgutschranks durch berechtigte Personen sicherzustellen, kann der Stückgutschrank dazu ausgebildet sein, dass sich Personen für bestimmte Handlungen authentifizieren. So können die berechtigten Personen beispielsweise einen Schlüssel, eine ID-Karte, einen Benutzernamen und/oder einen Code besitzen, um sich zu authentifizieren. Andere Arten der Zugangskontrolle sind jedoch denkbar. Es ist auch denkbar, dass keine gesonderte Zugangskontrolle am Stückgutschrank erfolgt, beispielsweise deshalb, weil der Stückgutschrank bereits in einem zugangsbeschränken Bereich aufgestellt ist, zu dem nur bestimmte Personen überhaupt Zugang bekommen.

Bei den Stückgutschränken der genannten Art handelt es sich bevorzugt, aber eben nicht zwingend, um sogenannte Packstationen oder dergleichen, in die Stückgüter, etwa in Form von Sendungen und/oder Paketen eingelegt werden, damit sie später von einer dafür berechtigten Person abgeholt werden können. Im Falle von Stückgütern kann die berechtigte Person ein Kunde oder ein Besteller des Stückguts sein. Im Falle von Paketen kann das der Adressat des Pakets sein. Es sind jedoch auch andere Stückgutschränke und/oder andere Nutzungen der Stückgutschränke denkbar. Es ist auch denkbar, dass von einem Kunden ein Stückgut in ein Stückgutfach eingelegt wird, das zum Weitertransport zu einem anderen Ort vorgesehen ist. Dort kann das Stückgut bedarfsweise einer berechtigten Person ausgehändigt oder in einem anderen Stückgutschrank zur Abholung durch eine berechtigte Person bereitgehalten werden.

Stückgutschränke der beschriebenen Art sind also für das Bereitstellen und Abgeben von Stückgütern durch Kunden oder berechtigte Personen an einem Ort, der von den Kunden oder berechtigten Personen problemlos aufgesucht werden kann, sehr zweckmäßig. Dies gilt insbesondere auch deshalb, weil das Abholen und/oder Ablegen von Stückgütern in dem Stückgutschrank und/oder aus dem Stückgutschrank nahezu zu beliebigen Tageszeiten und/oder beliebigen Wochentagen erfolgen kann.

Beispielsweise müssen Stückgüter, etwa in Form von Paketen, von einer Verteilbasis, in der die Stückgüter für einen bestimmten Stückgutschrank gesammelt werden, zu dem Stückgutschrank transportiert und/oder die in dem Stückgutschrank zum Verteilen hinterlegten Stückgüter abgeholt werden. Die abgeholten Stückgüter werden dann bedarfsweise zu der Verteilbasis transportiert und von dort gesammelt mit anderen Sendungen abgeholt oder weiterverteilt.

WO2014/080389 A2 offenbart ein Verfahren zum Bereithalten von abzuholenden Stückgütern und/oder zum Sammeln von abzugebenden Stückgütern mit wenigstens einem eine Mehrzahl von separaten Stückgutfächern aufweisenden Stückgutmodul an einem Abholort, wobei die Stückgutfächer jeweils eine von einer den Zugriff in das Stückgutfach verhindernde Verschlussstellung in eine den Zugriff auf das Stückgutfach freigebende Öffnungsstellung und zurück verstellbare Verschlusseinrichtung aufweisen, bei dem das wenigstens eine Stückgutmodul am Abholort unverlierbar an einer Dockingstation gesichert und/oder über eine gesicherte Verbindung mit dem Stückgutmodul verbundenen Dockingstation getrennt wird.

Um die Stückgutschränke mit Stückgütern zu versehen und/oder die Stückgüter aus den Stückgütern zu entnehmen, ist ein nicht unerheblicher Aufwand erforderlich. Somit ist das Handling der Stückgutmodule noch nicht mit einem zufriedenstellend geringen Aufwand möglich. Auch der alternative Transport von Stückgütern zu, insbesondere in dicht besiedelten Wohngebieten lebenden, Kunden mittels Flugdrohnen hat sich aus verschiedenen Gründen als nicht unproblematisch erwiesen. Daher liegt der vorliegenden Erfindung die Aufgabe zugrunde, das Verfahren der eingangs genannten und zuvor näher beschriebenen Art derart auszugestalten und weiterzubilden, dass das Handling der Stückgutmodule mit einem reduzierten Aufwand möglich ist.

Diese Aufgabe ist gemäß Anspruch 1 gelöst durch ein Verfahren zum Bereithalten von abzuholenden Stückgütern und/oder zum Sammeln von abzugebenden Stückgütern mit wenigstens einem eine Mehrzahl von separaten Stückgutfächern aufweisenden Stückgutmodul an einem Abholort, wobei die Stückgutfächer jeweils eine von einer den Zugriff in das Stückgutfach verhindernde Verschlussstellung in eine den Zugriff auf das Stückgutfach freigebende Öffnungsstellung und zurück verstellbaren Verschlusseinrichtung aufweisen,
- bei dem das wenigstens eine Stückgutmodul mit einer Drohne über den Luftweg von einer Verteilbasis an einen Übergabeort und/oder umgekehrt transportiert wird,
- bei dem das wenigstens eine Stückgutmodul mit einem Kurierfahrzeug von dem Übergabeort an den Abholort und/oder umgekehrt transportiert wird und
- bei dem das wenigstens eine Stückgutmodul am Abholort unverlierbar an einer Dockingstation gesichert und/oder über eine gesicherte Verbindung mit dem Stückgutmodul verbundenen Dockingstation getrennt wird.

Erfindungsgemäß werden mithin Stückgüter an einem Abholort in einem Stückgutmodul bereitgehalten oder gesammelt. Bei den Stückgütern kann es sich beispielsweise um umverpackte Stückgüter, Pakete oder andere Arten von Sendungen handeln. Diese werden ferner beispielsweise am Abholort von einer berechtigten Person abgeholt. Es kann alternativ oder zusätzlich aber auch vorgesehen sein, dass das wenigstens eine Stückgutmodul mit den darin gesammelten Stückgütern abgeholt wird, um das Stückgutmodul bedarfsweise zurück zur Verteilbasis zu transportieren. Die Verteilbasis ist dabei bedarfsweise eine Art Depot, zu dem die Stückgüter transportiert und in dem die Stückgüter in Stückgutfächer der Stückgutmodule eingelegt werden. Alternativ oder zusätzlich können in der Verteilbasis auch die in den Stückgutmodulen gesammelten, insbesondere die von unterschiedlichen Personen in unterschiedliche Stückgutfächer des wenigstens einen Stückgutmoduls eingelegten Stückgüter, aus dem Stückgutmodul, insbesondere den Stückgutfächern, entnommen und von der Verteilbasis an unterschiedliche Zielorte und/oder andere Verteilbasen, verteilt werden.

Egal ob die Stückgüter am Abholort oder in der Verteilbasis in die Stückgutfächer eingelegt worden sind, wird ein unberechtigter Zugriff auf die Stückgüter in den Stückgutfächern verhindert, um eine Beschädigung oder ein Diebstahl der in den Stückgutfächern vorgesehenen Stückgüter zu vermeiden. Deshalb weisen die Stückgutfächer eine Verschlusseinrichtung auf, die beispielsweise nach Art einer Tür oder Klappe ausgebildet sein kann. Die Verschlusseinrichtung lässt sich von einer Verschlussstellung, in der ein Zugriff auf das Stückgut in dem entsprechenden Stückgutfach verhindert wird, in eine Öffnungsstellung und zurück verstellen. In der Öffnungsstellung ist der Zugriff auf das Stückgut in dem entsprechenden Stückgutfach des wenigstens einen Stückgutmoduls freigegeben. In der Öffnungsstellung der Verschlusseinrichtung lässt sich also ein Stückgut aus dem Stückgutfach des Stückgutmoduls entnehmen und/oder ein Stückgut in das Stückgutfach des Stückgutmoduls einlegen.

Das wenigstes eine Stückgutmodul wird mit einer Drohne über den Luftweg von einer Verteilbasis an einen Übergabeort transportiert. Alternativ oder zusätzlich wird das wenigstens eine Stückgutmodul von einem Übergabeort zu einer Verteilbasis transportiert. Wird das Stückgutmodul von der Drohne zum Übergabeort transportiert, so wird das Stückgutmodul von einem Kurierfahrzeug zum Abholort verbracht. Wird alternativ oder zusätzlich das wenigstens eine Stückgutmodul von der Drohne vom Übergabeort zur Verteilbasis geflogen, wurde das Stückgutmodul zuvor von einem Kurierfahrzeug vom Abholort an den Übergabeort gefahren.

Damit das Stückgutmodul am Abholort nicht von unberechtigten Personen entwendet werden kann, wird das wenigstens eine Stückgutmodul am Abholort unverlierbar an einer Dockingstation gesichert. Mit anderen Worten wird das wenigstens eine Stückgutmodul am Abholort mit der Dockingstation fest verbunden, wobei diese Verbindung grundsätzlich lösbar ausgebildet ist, um das Stückgutmodul wieder zu entfernen. Jedoch ist diese Verbindung gesichert, so dass die Verbindung nicht von jedermann oder ohne Weiteres getrennt werden kann. Die Sicherung kann gleichfalls leicht und schnell geöffnet oder umgangen werden, wenn eine berechtigte Person oder eine hierzu ausgebildete Einrichtung entsprechend ausgestattet ist. Entsprechende Sicherungen sind dabei in vielfacher Ausgestaltung bekannt. Alternativ oder zusätzlich zur Sicherung des Stückgutmoduls kann die gesicherte Verbindung zwischen der Dockingstation und dem wenigstens einen Stückgutmodul erfindungsgemäß aber auch wieder getrennt werden.

Mithin können die Stückgüter sehr schnell und unkompliziert zwischen der Verteilbasis und dem Übergabeort hin und her transportiert werden, indem sich des wenigstens einen Stückgutmoduls und der wenigstens einen Drohne bedient wird. Zudem können die Stückgüter sehr schnell und unkompliziert zwischen dem Übergabeort und dem Abholort hin und her transportiert werden, indem sich des wenigstens einen Stückgutmoduls und des wenigstens einen Kurierfahrzeugs bedient wird. Andernfalls müsste beispielsweise ein Kurier mit seinem Kurierfahrzeug durch den öffentlichen Straßenverkehr von der Verteilbasis zum Abholort fahren und dort die Stückgüter aus dem Kurierfahrzeug in die Stückgutfächer des Stückgutmoduls umladen. Dies ist insbesondere dann aufwendig, wenn die Routen des Kurierfahrzeugs stauanfällig sind. Da die Kurierfahrzeuge erfindungsgemäß nur verhältnismäßig kurze Strecken von dem Übergabeort zu dem Abholort zurücklegen, stellt der öffentliche Straßenverkehr kaum eine Einschränkung dar. Zudem besteht nicht das Problem des eingeschränkten Luftraums, das bestehen würde, wenn die Drohnen direkt zu dem Abholort fliegen würden. Der Übergabeort kann nämlich problemlos so gewählt werden, dass Drohnen dort gut landen und die Kurierfahrzeuge die Stückgutmodule dort gut abholen bzw. hinbringen können.

Außerdem können von einem Übergabeort unterschiedliche Stückgutmodule leicht zu unterschiedlichen Abholorten verteilt werden. Es muss also nicht für jeden Abholort ein separater Übergabeort vorgesehen werden. Dabei kann eine Drohne bedarfsweise zwei oder mehr Stückgutmodule gleichzeitig transportieren. Die eine Drohne kann aber nacheinander unterschiedliche Stückgutmodule transportieren. Es ist aber ebenfalls denkbar, dass verschiedene Stückgutmodule, bedarfsweise gleichzeitig, von mehreren Drohnen zum Übergabeort und/oder zur Verteilbasis geflogen werden. Unabhängig davon können die Stückgutmodule von einem oder mehreren Kurierfahrzeugen zum Abholort und/oder zum Übergabeort transportiert werden. Auf diese Weise ist das beschriebene Verfahren sehr einfach und flexibel an unterschiedliche Anforderungen und örtliche Gegebenheiten anzupassen.

Bei einer ersten besonders bevorzugten Ausgestaltung des Verfahrens ist das wenigstens eine mit einer Drohne über den Luftweg von einer Verteilbasis an einen Übergabeort und/oder umgekehrt transportierte Stückgutmodul mit Stückgütern, insbesondere in den Stückgutfächern, beladen. So können zusammen mit dem Stückgutmodul auch Stückgüter von der Verteilbasis zum Übergabeort und/oder andersherum transportiert werden. Werden beispielsweise Stückgutmodule zum Wiederbeladen in der Verteilbasis zurück zur Verteilbasis transportiert, können auf diesem Wege gleich weitere zu verteilende Stückgüter zur Verteilbasis mitgenommen werden.

Alternativ oder zusätzlich kann das wenigstens eine mit einem Kurierfahrzeug von dem Übergabeort an den Abholort und/oder umgekehrt transportierte Stückgutmodul mit Stückgütern beladen sein, wobei die Stückgüter insbesondere in den Stückgutfächern aufgenommen sein können. So können zusammen mit dem Stückgutmodul auch Stückgüter von dem Übergabeort zum Abholort und/oder andersherum transportiert werden. Werden beispielsweise Stückgutmodule zum Wiederbeladen in der Verteilbasis zurück zur Verteilbasis transportiert, können auf diesem Wege gleich weitere zu verteilende Stückgüter zur Verteilbasis mitgenommen werden.

In diesem Zusammenhang bietet es sich dann weiter an, wenn das wenigstens eine mit Stückgütern beladene Stückgutfächer aufweisende Stückgutmodul am Abholort unverlierbar an einer Dockingstation gesichert wird. Alternativ oder zusätzlich kann das wenigstens eine mit Stückgütern beladene Stückgutfächer aufweisende Stückgutmodul am Abholort von der über eine gesicherte Verbindung mit dem Stückgutmodul verbundene Dockingstation getrennt werden. Die Stückgüter können folglich währenddessen in den Stückgutfächern verbleiben.

Besonders zweckmäßig ist es zudem, wenn das wenigstens eine, bedarfsweise mit Stückgütern beladene Stückgutfächer aufweisende, Stückgutmodul mit einer Drohne über den Luftweg autonom von einer Verteilbasis an einen Übergabeort und/oder umgekehrt transportiert wird. Auf diese Weise kann nicht nur Personal eingespart, sondern auch besonders kleine und daher leicht an dem Übergabeort zu landende Drohnen verwendet werden. Nicht zuletzt ist infolge autonomer Drohen eine sehr flexible Verfahrensführung möglich.

Damit die Stückgutmodule und somit die Stückgüter nicht in die Hände unbefugter Personen fallen können, ist bevorzugt vorgesehen, dass die gesicherte Verbindung zwischen dem wenigstens einen Stückgutmodul und der Dockingstation durch eine Authentifizierung zum Trennen freigegeben oder getrennt wird. Nur wenn eine Authentifizierung erfolgreich abgeschlossen ist, kann das Stückgutmodul von der Dockingstation getrennt werden. Ergänzend kann dann vorgesehen sein, dass die Authentifizierung durch eine Übermittlung von wenigstens einer Berechtigungsinformation an die Dockingstation erfolgt. Die wenigstens eine Berechtigungsinformation kann dabei beispielweise von einem Kurier, einem Kurierfahrzeug und/oder einer Steuerungszentrale an die Dockingstation übermittelt werden. Dabei kann die Steuerzentrale zur zentralen Steuerung des Verfahrens vorgesehen sein, wozu die Steuerzentrale weder am Abholort noch am Übergabeort oder in der Verteilbasis vorgesehen sein muss. Die Kommunikation kann dabei beispielweise über Funk, insbesondere Mobilfunk, oder über eine Datenleitung übermittelt werden. Alternativ oder zusätzlich kann die wenigstens eine Berechtigungsinformation durch Auslesen der Berechtigungsinformation eines Kuriers und/oder eines Kurierfahrzeugs von der Dockingstation erfasst werden. Die Berechtigungsinformation ist dann beispielsweise in einem Speichermedium, beispielsweise als 2D-Barcode gespeichert. Alternativ oder zusätzlich kann die Sicherheitseinrichtung aber auch mit einer Schlüsseleinheit aufgeschlossen werden.

Um den Aufwand für die Durchführung des Verfahrens zu reduzieren, kann es sich anbieten, wenn als Kurierfahrzeug ein autonom fahrender Kurierbot eingesetzt wird. In diesem Falle kann das Verfahren auch sehr viel flexibler eingesetzt werden. Beispielsweise ist eine Anpassung an bestimmte örtliche Gegebenheiten durch die Verwendung von Kurierbots sehr einfach und schnell möglich.

Der Einfachheit halber kann es sich bei der Dockingstation um eine fest, insbesondere unlösbar, im Boden verankerte Dockingstation handeln. So kann einfach aber zugleich zuverlässig das wenigstens eine Stückgutmodul am Abholort verankert werden, um ein Entwenden des Stückgutmoduls zu verhindern. Alternativ oder zusätzlich kann als Dockingstation ein, insbesondere unlösbar, im Boden verankerter Stückgutschrank verwendet werden. In dem Stückgutschrank kann dann das wenigstens eine Stückgutmodul, bedarfsweise aber auch eine Mehrzahl von Stückgutmodulen aufgenommen werden.

Eine besonders effiziente, schnelle und gegenüber einer potentiellen Manipulation geschützte Übergabe des wenigstens einen Stückgutmoduls an das Kurierfahrzeug kann erreicht werden, wenn es das wenigstens eine Stückgutmodul von der Drohne auf das Kurierfahrzeug abgesetzt wird. Eine besonders einfache und zuverlässige Übergabe des wenigstens einen Stückgutmoduls an das Kurierfahrzeug kann ferner erreicht werden, wenn das wenigstens eine Stückgutmodul am Übergabeort vom Kurierfahrzeug unterfahren wird.

Das Stückgutmodul kann zur Vereinfachung des Verfahrens als, insbesondere integraler, Bestandteil eines Stückgutschranks ausgebildet sein. Im Stückgutschrank ist dann die weitere Funktionalität des Stückgutschranks neben der Bereitstellung eines Stückgutmoduls mit den Stückgutfächern integriert. Es kann beispielsweise eine Bedieneinrichtung, eine Steuereinrichtung und/oder eine Authentifiziereinrichtung ergänzend zu dem einen Stückgutmodul vorgesehen sein. Dies vereinfacht bedarfsweise auch die Verankerung des Stückgutmoduls bzw. des Stückgutschranks am Abholort. Alternativ könnte eine Stückgutschrankeinheit des Stückgutschranks, etwa umfassend eine Bedieneinrichtung, eine Steuereinrichtung und/oder eine Authentifiziereinrichtung, am Abholort verankert sein, so dass dann noch ergänzend zur Komplettierung des Stückgutschranks das wenigstens eine Stückgutmodul in der Stückgutschrankeinheit gesichert verankert werden muss.

Mithin wird bei dieser Ausgestaltung des Verfahrens der Stückgutschrank mit einer Drohne über den Luftweg von einer Verteilbasis an einen Übergabeort und/oder umgekehrt transportiert. Ergänzend wird der Stückgutschrank mit einem Kurierfahrzeug von dem Übergabeort an den Abholort und/oder umgekehrt transportiert und es wird der Stückgutschrank am Abholort unverlierbar an einer Dockingstation gesichert und/oder über eine gesicherte Verbindung mit der Stückgutschrank verbundenen Dockingstation getrennt.

Nachfolgend wird die Erfindung anhand einer lediglich Ausführungsbeispiele darstellenden Zeichnung näher erläutert. In der Zeichnung zeigt
- Fig. 1A-G: einzelne Verfahrensschritte eines Verfahrens zum Bereithalten von abzuholenden Stückgütern und zum Sammeln von abzugebenden Stückgütern an einem Abholort mit einem Stückgutmodul in schematischen Darstellungen und
- Fig. 2: ein mit dem Verfahren gemäß Fig. 1 durchzuführendes Verteilprinzip in einer schematischen Darstellung.

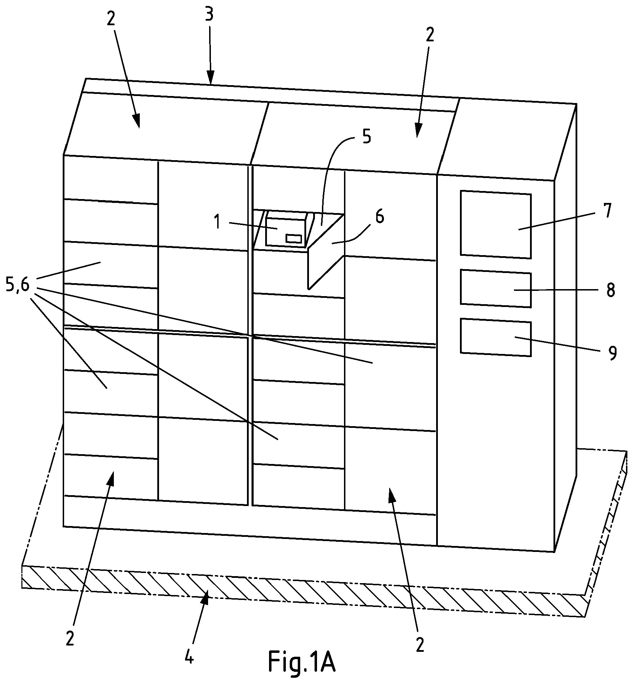

In der Fig. 1A-G ist schematisch ein Verfahren zum Bereithalten von abzuholenden Stückgütern 1 und zum Sammeln von abzugebenden Stückgütern 1 an einem Abholort mit einem Stückgutmodul 2 als integraler Bestandteil eines in der Fig. 1A in einer Verteilbasis vorgesehenen Stückgutschranks 3 dargestellt. Zunächst wird das Stückgutmodul 2 in einer Verteilbasis 4 mit Stückgütern 1 beladen. Typischerweise werden dabei Stückgüter 1 einzeln in Stückgutfächer 5 des Stückgutmoduls 2 eingelegt. Die Stückgüter 1 sind typischerweise zur Abholung durch unterschiedliche Abholer am Abholort bestimmt. Damit die jeweiligen Stückgüter 1 nur von den jeweiligen Abholern oder von den Abholern beauftragten Personen abgeholt werden können, werden die Stückgutfächer 5 nach dem Einlegen der Stückgüter 1 in die Stückgutfächer durch Verschlusseinrichtungen 6 verschlossen. Die Verschlusseinrichtungen 6 sind dabei als Klappen ausgebildet, die aus einer das Stückgutfach 5 verschließenden Verschlussstellung in eine den Zugriff in das Stückgutfach 5 freigebende Öffnungsstellung zur Seite geschwenkt werden können. Nach dem Einlegen eines Stückguts 1 in ein Stückgutfach 5 kann die Verschlusseinrichtung 6 wieder zurück in die Verschlussstellung geschwenkt und dort arretiert werden. Neben den Stückgutfächern 5 des Stückgutmoduls 2 umfasst der Stückgutschrank 3 nach eine Bedieneinrichtung 7 für die Bedienung des Stückgutschranks 3 beispielsweise durch einen Abholer, eine Steuereinrichtung 8 beispielsweise zum Arretieren und Freigeben von Verschlusseinrichtungen 6 bestimmter Stückgutfächer 5 und eine Authentifiziereinrichtung 9 zur Authentifizierung eines Abholers. Die Authentifizierung eines Abholers kann dabei zusammen mit der Steuereinrichtung 8 sicherstellen, dass nur das Stückgutfach 5 geöffnet wird, in dem das für den Abholer bestimmte Stückgut 1 ursprünglich eingelegt worden ist.

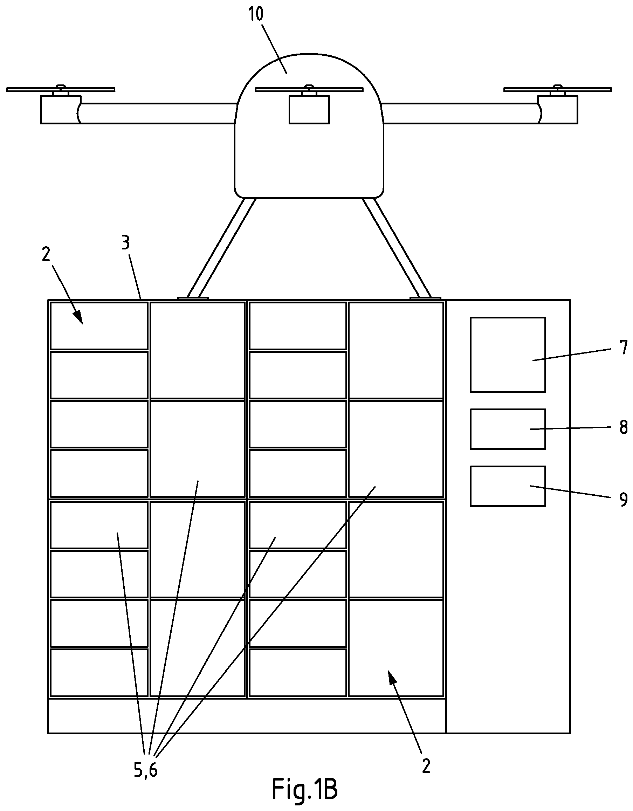

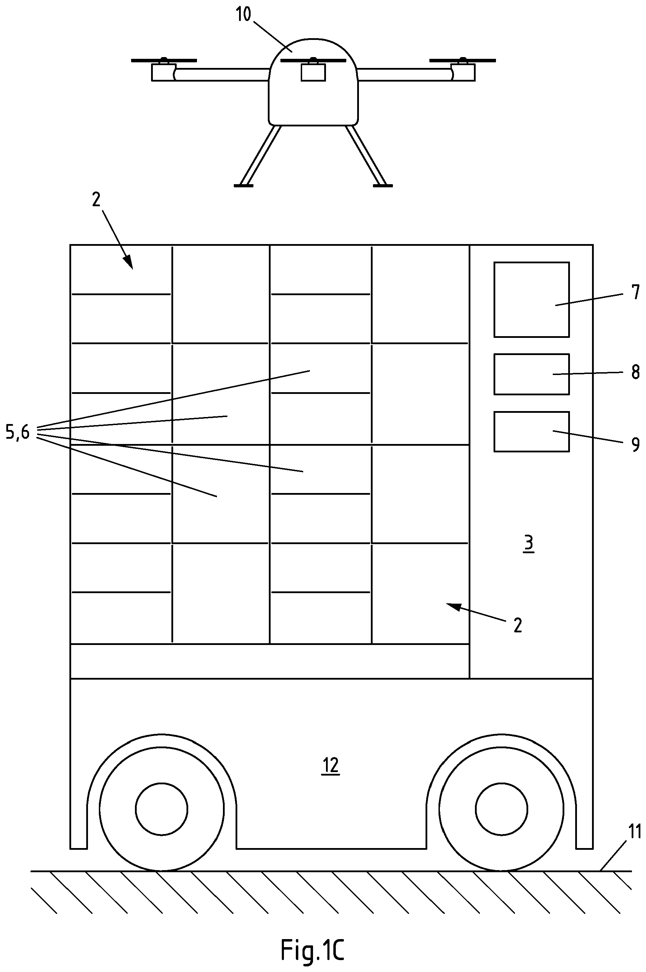

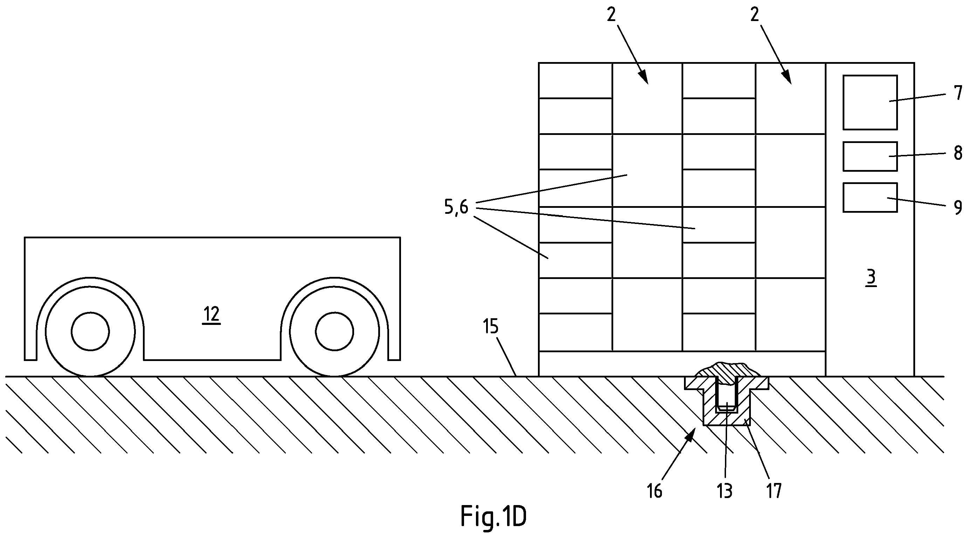

Wie dies in der Fig. 1B dargestellt ist, wird das Stückgutmodul 2 nach dem Beladen mit Stückgütern 1 von einer Drohne 10 ergriffen und zu einem Übergabeort 11 geflogen. Dort setzt die Drohne 10 das Stückgutmodul 2 auf ein dort wartendes, autonom fahrendes Kurierfahrzeug 12 ab, wie dies in der Fig. 1C dargestellt ist. Das Kurierfahrzeug 12 fährt das Stückgutmodul 2 anschließend vom Übergabeort 11 autonom zum Abholort 15. Am Abholort 15 setzt das Kurierfahrzeug 12 das Stückgutmodul 2 auf einer Dockingstation 16 ab, wie dies in der Fig. 1D dargestellt ist. Die Dockingstation 16 umfasst dazu eine Aufnahme 17, in die ein Pin 13 das Stückgutmoduls 2 beim Absetzen eingreift. Der Pin 13 wird dabei in der Aufnahme 17 der Dockingstation 16 gesichert, so dass das Stückgutmodul 2 nicht ohne Weiteres aus der Aufnahme 17 herausgezogen werden kann. Hier wären auch andere gesicherte Verbindungen zwischen dem Stückgutmodul 2 und der Dockingstation 16 denkbar. Es wäre auch denkbar, dass die Dockingstation einen Pin aufweist, der in eine Aufnehme des Sendungsmoduls eingreift.

Nun kann sich am Abholort 15 ein Abholer über die Bedieneinrichtung 7, die Authentifiziereinrichtung 9 und die Steuereinrichtung 8 am Stückgutschrank 3 authentifizieren. Die Steuereinrichtung 8 öffnet danach das Stückgutfach 5, in dem das für den bestimmten Abholer bestimmte Stückgut 1 eingelegt worden ist. Der Abholer oder ein Ablieferer kann sich ebenfalls über die Bedieneinrichtung 7, die Authentifiziereinrichtung 9 und die Steuereinrichtung 8 am Stückgutschrank 3 authentifizieren und sich ein leeres Stückgutfach 5 öffnen lassen. Der Abholer kann nun ein Stückgut 1 in das geöffnete Stückgutfach 5 einlegen und das Stückgutfach 5 wieder schließen.

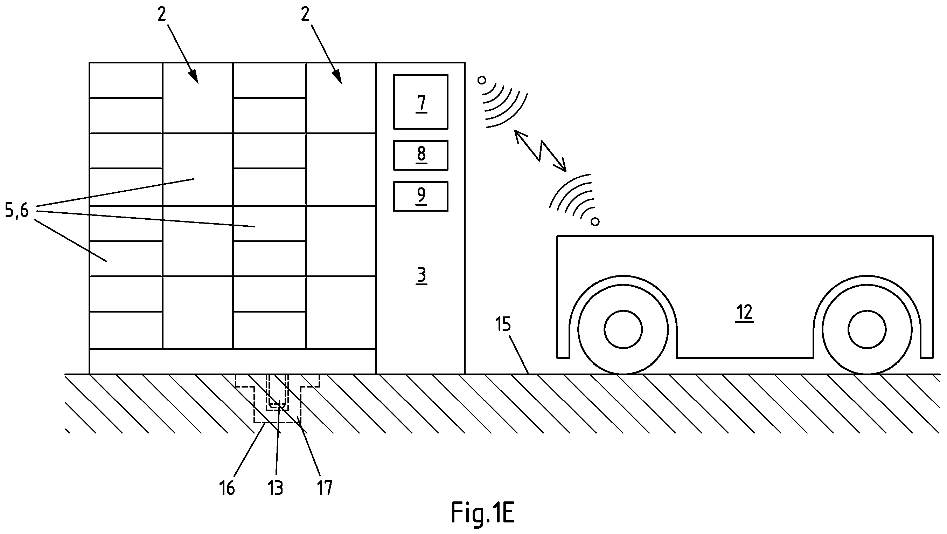

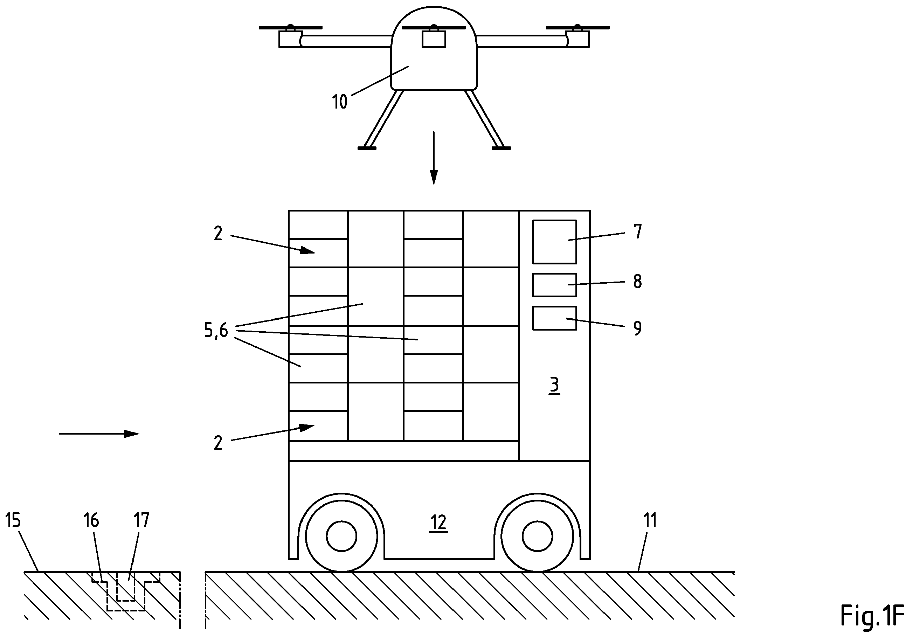

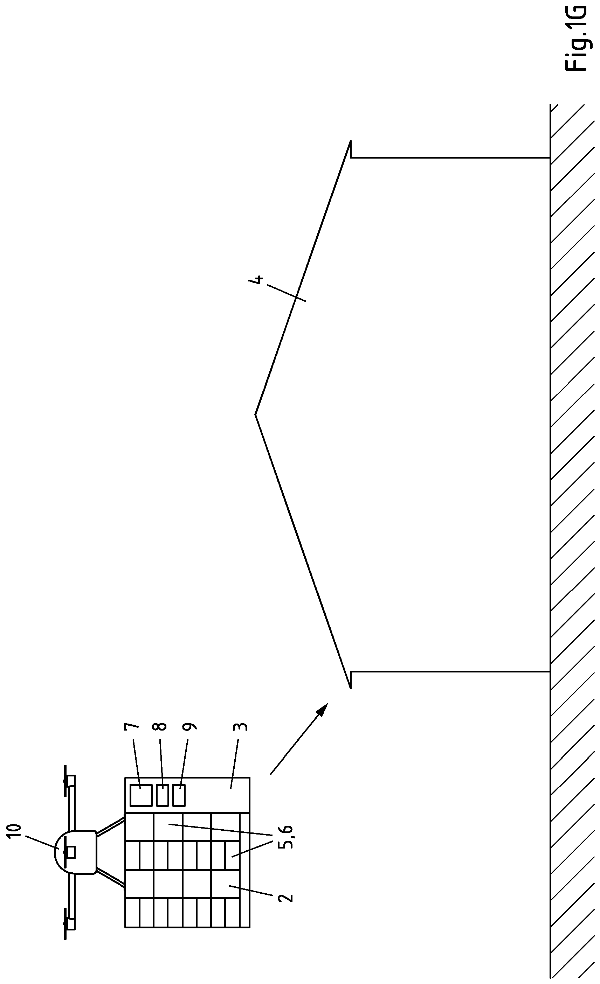

Beispielsweise nachdem die abzuholenden Stückgüter 1 aus dem Stückgutmodul 2 entnommen worden sind und/oder nachdem andere Stückgüter 1 in die leeren Stückgutfächer 5 eingelegt worden sind, fährt ein Kurierfahrzeug 12 zum Stückgutmodul 2 bzw. dem Stückgutschrank 3. Das Kurierfahrzeug 12 authentifiziert sich nach seiner Ankunft am Stückgutmodul 2 bzw. am Stückgutschrank 3, so dass die gesicherte Verbindung zwischen der Dockingstation 16 und dem Stückgutmodul 2 bzw. dem Stückgutschrank 3 zur Trennung freigibt, wie dies in der Fig. 1E dargestellt ist. Sodann übernimmt das Kurierfahrzeug 12 das Stückgutmodul 2 bzw. den Stückgutschrank 3. Anschließend fährt das Kurierfahrzeug 12 das Stückgutmodul 2 bzw. den Stückgutschrank 3, wie dies in der Fig. 1F dargestellt ist, zu dem Übergabeort 11 oder bedarfsweise auch zu einem andere Übergabeort 11 zurück. Dort erfolgt eine erneute Übergabe des Stückgutmoduls 2 oder des Stückgutschranks 3 an eine Drohne 10, welche das Stückgutmodul 2 bzw. den Stückgutschrank 3 zu einer Verteilbasis 4 zurückfliegt, wie dies in der Fig. 1G dargestellt ist. Bei der einen Verteilbasis 4 handelt es sich insbesondere um die Verteilbasis 4, in der das Stückgutmodul 2 bzw. der Stückgutschrank 3 zunächst mit Stückgütern 1 bestückt worden ist. Dort werden die belegten Stückgutfächer 5 geleert und die entsprechenden Stückgüter 1 weiter verteilt. Nun kann das zuvor beschriebene Verfahren erneut ausgeführt werden.

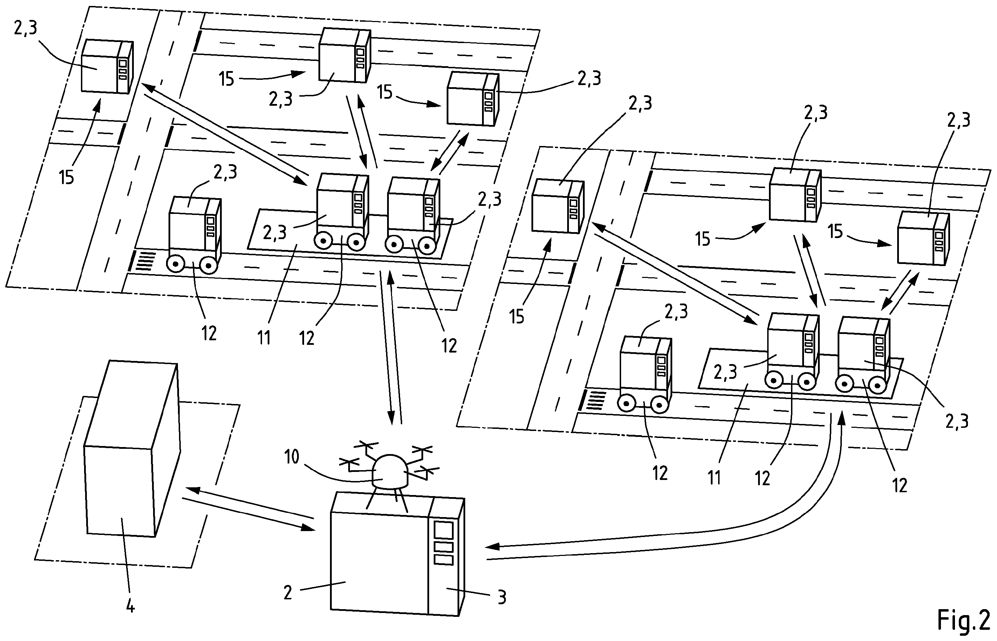

Dabei können, wie dies in der Fig. 2 dargestellt ist, von einer Verteilbasis 4 mehrere Übergabeorte 11 von den Drohnen 10 samt Stückgutmodul 2 bzw. Stückgutschrank 3 angeflogen werden. Zudem können von jedem Übergabeort 11 mehrere Abholorte 15 von den Kurierfahrzeugen 12 angefahren werden. Die Kurierfahrzeuge 12 fahren dabei die Stückgutmodule 2 bzw. Stückgutschränke 3 vorzugsweise wieder zu dem Übergabeort 11 zurück von dem aus die Stückgutmodule 2 bzw. Stückgutschränke 3 an die Abholorte 15 verteilt worden sind. Dort werden die Stückgutmodule 2 bzw. Stückgutschränke 3 wieder mittels Drohnen 10 an die Verteilbasis 4 zurückgeflogen, in der die Stückgutmodule 2 bzw. die Stückgutschränke 3 ursprünglich mit Stückgütern 1 bestückt worden sind.

### Bezugszeichenliste

- 1: Stückgut
- 2: Stückgutmodul
- 3: Stückgutschrank
- 4: Verteilbasis
- 5: Stückgutfach
- 6: Verschlusseinrichtung
- 7: Bedieneinrichtung
- 8: Steuereinrichtung
- 9: Authentifiziereinrichtung
- 10: Drohne
- 11: Übergabeort
- 12: Kurierfahrzeug
- 13: Pin
- 15: Abholort
- 16: Dockingstation
- 17: Aufnahme

## Patentansprüche

1. Verfahren zum Bereithalten von abzuholenden Stückgütern (1) und/oder zum Sammeln von abzugebenden Stückgütern (1) mit wenigstens einem eine Mehrzahl von separaten Stückgutfächern (5) aufweisenden Stückgutmodul (2) an einem Abholort (15), wobei die Stückgutfächer (5) jeweils eine von einer den Zugriff in das Stückgutfach (5) verhindernde Verschlussstellung in eine den Zugriff auf das Stückgutfach (5) freigebende Öffnungsstellung und zurück verstellbaren Verschlusseinrichtung (6) aufweisen,
- bei dem das wenigstens eine Stückgutmodul (2) mit einer Drohne (10) über den Luftweg von einer Verteilbasis (4) an einen Übergabeort (11) und/oder umgekehrt transportiert wird,
- bei dem das wenigstens eine Stückgutmodul (2) mit einem Kurierfahrzeug (12) von dem Übergabeort (11) an den Abholort (15) und/oder umgekehrt transportiert wird und
- bei dem das wenigstens eine Stückgutmodul (2) am Abholort (15) unverlierbar an einer Dockingstation (16) gesichert und/oder über eine gesicherte Verbindung mit dem Stückgutmodul (2) verbundenen Dockingstation (16) getrennt wird.

2. Verfahren nach Anspruch 1,
- bei dem das wenigstens eine mit Stückgütern (1) beladene Stückgutfächer (5) aufweisende Stückgutmodul (2) mit einer Drohne (10) über den Luftweg von einer Verteilbasis (4) an einen Übergabeort (11) und/oder umgekehrt transportiert wird und/oder
- bei dem das wenigstens eine mit Stückgütern (1) beladene Stückgutfächer (5) aufweisende Stückgutmodul (2) mit einem Kurierfahrzeug (12) von dem Übergabeort (11) an den Abholort (15) und/oder umgekehrt transportiert wird

3. Verfahren nach Anspruch 2,
bei dem das wenigstens eine mit Stückgütern (1) beladene Stückgutfächer (5) aufweisende Stückgutmodul (2) am Abholort (15) unverlierbar an einer Dockingstation (16) gesichert und/oder über eine gesicherte Verbindung mit dem Stückgutmodul (2) verbundenen Dockingstation (16) getrennt wird.

4. Verfahren nach einem der Ansprüche 1 bis 3,
bei dem das wenigstens eine, bedarfsweise mit Stückgütern (1) beladene Stückgutfächer (5) aufweisende, Stückgutmodul (2) mit einer Drohne (10) über den Luftweg autonom von einer Verteilbasis (4) an einen Übergabeort (11) und/oder umgekehrt transportiert wird,

5. Verfahren nach einem der Ansprüche 1 bis 4,
- bei dem die gesicherte Verbindung zwischen dem wenigstens einen Stückgutmodul (2) und der Dockingstation (16) durch eine Authentifizierung zum Trennen freigegeben oder getrennt wird und
- bei dem, vorzugsweise, die Authentifizierung durch Übermittlung von wenigstens einer Berechtigungsinformation von einem Kurier, einem Kurierfahrzeug (12) und/oder einer Steuerungszentrale an die Dockingstation (16) und/oder durch Auslesen einer Berechtigungsinformation eines Kuriers und/oder eines Kurierfahrzeugs (12) und/oder durch Aufschließen einer Sicherungseinrichtung mit einer Schlüsseleinheit erfolgt.

6. Verfahren nach einem der Ansprüche 1 bis 5,
bei dem als Kurierfahrzeug (12) ein autonom fahrender Kurierbot eingesetzt wird.

7. Verfahren nach einem der Ansprüche 1 bis 6,
bei dem als Dockingstation (16) eine fest, insbesondere unlösbar, im Boden verankerte Dockingstation (16) und/oder ein, insbesondere unlösbar, im Boden verankerter Stückgutschrank (3) zur Aufnahme von wenigstens einem Stückgutmodul (2) verwendet wird.

8. Verfahren nach einem der Ansprüche 1 bis 7,
- bei dem das wenigstens eine Stückgutmodul (2) von der Drohne (10) auf das Kurierfahrzeug (12) abgesetzt wird und/oder
- bei dem das wenigstens eine Stückgutmodul (2) am Übergabeort (11) von einem Kurierfahrzeug (12) unterfahren wird.

9. Verfahren nach einem der Ansprüche 1 bis 8,
- bei dem das Stückgutmodul (2), insbesondere integraler Bestandteil, eines Stückgutschranks (3) ist und
- bei dem der Stückgutschrank (3) mit einer Drohne (10) über den Luftweg von einer Verteilbasis an einen Übergabeort (11) und/oder umgekehrt transportiert wird,
- bei dem der Stückgutschrank (3) mit einem Kurierfahrzeug (12) von dem Übergabeort (11) an den Abholort (15) und/oder umgekehrt transportiert wird und
- bei dem der Stückgutschrank (3) am Abholort (15) unverlierbar an einer Dockingstation (16) gesichert und/oder über eine gesicherte Verbindung zwischen dem Stückgutschrank (3) und der Dockingstation getrennt wird.

## Claims

1. Method for holding available piece goods (1) to be collected and/or for collecting piece goods (1) to be delivered with at least one piece goods module (2) having a plurality of separate piece goods compartments (5) at a collection location (15), wherein the piece goods compartments (5) respectively have a closure device (6) which is movable from a closure position preventing access to the piece goods compartment (5) into an opening position releasing access to the piece goods compartment (5) and back,
- in which the at least one piece goods module (2) is transported by a drone (10) by air from a distribution base (4) to a transfer location (11) and/or vice versa,
- in which the at least one piece goods module (2) is transported by a courier vehicle (12) from the transfer location (11) to the collection location (15) and/or vice versa, and
- in which the at least one piece goods module (2) is captively secured to a docking station (16) at the collection location (15) and/or is disconnected from a docking station (16) connected to the piece goods module (2) via a secure connection.

2. Method according to claim 1,
- in which the at least one piece goods module (2) having piece goods compartments (5) loaded with piece goods (1) is transported by a drone (10) by air from a distribution base (4) to a transfer location (11) and/or vice versa and/or
- in which the at least one piece goods module (2) having piece goods compartments (5) loaded with piece goods (1) is transported by a courier vehicle (12) from the transfer location (11) to the collection location (15) and/or vice versa.

3. Method according to claim 2,
in which the at least one piece goods module (2) having piece goods compartments (5) loaded with piece goods (1) is secured captive to a docking station (16) at the collection location (15) and/or is disconnected from a docking station (16) connected to the piece goods module (2) via a secured connection.

4. Method according to any one of claims 1 to 3,
in which the at least one piece goods module (2), which has piece goods compartments (5) loaded as required with piece goods (1), is transported autonomously by a drone (10) by air from a distribution base (4) to a transfer location (11) and/or vice versa,

5. Method according to any one of claims 1 to 4,
- in which the secure connection between the at least one piece goods module (2) and the docking station (16) is released or disconnected by an authentication for disconnection, and
- in which, preferably, the authentication is carried out by transmitting at least one authorization information item from a courier, a courier vehicle (12) and/or a control center to the docking station (16) and/or by reading an authorization information item from a courier and/or a courier vehicle (12) and/or by unlocking a security device with a key unit.

6. Method according to any one of claims 1 to 5,
in which an autonomously driving courier bot is used as the courier vehicle (12).

7. Method according to any one of claims 1 to 6,
in which a docking station (16) firmly, in particular non-detachably, anchored in the floor and/or a piece goods cabinet (3) anchored in the floor, in particular non-detachably, is used as the docking station (16) for receiving at least one piece goods module (2).

8. Method according to any one of claims 1 to 7,
- in which the at least one piece goods module (2) is placed onto the courier vehicle (12) by the drone (10) and/or
- in which the at least one piece goods module (2) is under-driven by a courier vehicle (12) at the transfer location (11).

9. Method according to any one of claims 1 to 8,
- in which the piece goods module (2) is an, in particular integral, component of a piece goods cabinet (3), and
- in which the piece goods cabinet (3) is transported by a drone (10) by air from a distribution base to a transfer location (11) and/or vice versa,
- in which the piece goods cabinet (3) is transported by a courier vehicle (12) from the transfer location (11) to the collection location (15) and/or vice versa, and
- in which the piece goods cabinet (3) is captively secured to a docking station (16) at the collection location (15) and/or is disconnected from the docking station connected to the piece goods cabinet (3) via a secure connection.

## Revendications

1. Procédé pour tenir à disposition de marchandises générales (1) à enlever et/ou pour collecter de marchandises générales (1) à délivrer avec au moins un module de marchandises générales (2) ayant une pluralité de compartiments de marchandises générales (5) séparés à un lieu d'enlèvement (15), où les compartiments de marchandises générales (5) ont respectivement un dispositif de fermeture (6) réglable d'une position de fermeture empêchant un accès dans le compartiment de marchandises générales (5) à une position d'ouverture libérant un accès au compartiment de marchandises générales (5) et inversement,
- dans lequel le au moins un module de marchandises générales (2) est transporté par voie aérienne avec un drone (10) d'une base de distribution (4) à un lieu de transfert (11) et/ou inversement,
- dans lequel le au moins un module de marchandises générales (2) est transporté par un véhicule de coursier (12) du lieu de transfert (11) au lieu d'enlèvement (15) et/ou inversement et
- dans lequel le au moins un module de marchandises générales (2) est fixé de manière imperdable à une station d'accueil (16) sur le lieu d'enlèvement (15) et/ou est séparé de la station d'accueil (16) reliée au module de marchandises générales (2) par une liaison sécurisée.

2. Procédé selon la revendication 1,
- dans lequel le au moins un module de marchandises générales (2) ayant des compartiments d'articles (5) chargés de marchandises générales (1) est transporté avec un drone (10) par voie aérienne d'une base de distribution (4) à un lieu de transfert (11) et/ou inversement et/ou
- dans lequel le au moins un module de marchandises générales (2) ayant des compartiments d'articles (5) chargés de marchandises générales (1) est transporté par un véhicule de coursier (12) du lieu de transfert (11) au lieu d'enlèvement (15) et/ou inversement

3. Procédé selon la revendication 2,
dans lequel le au moins un module de marchandises générales (2) ayant des compartiments d'articles (5) chargés d'articles (1) est fixé de manière imperdable à une station d'accueil (16) sur le lieu d'enlèvement (15) et/ou est séparé de la station d'accueil (16) reliée au module de marchandises générales (2) par une liaison sécurisée.

4. Procédé selon l'une des revendications 1 à 3,
dans lequel le au moins un module de marchandises générales (2) ayant des compartiments de marchandises générales (5) chargés en cas de besoin avec des marchandises générales (1) est transporté de manière autonome par voie aérienne avec un drone (10) d'une base de distribution (4) à un lieu de transfert (11) et/ou inversement,

5. Procédé selon l'une des revendications 1 à 4,
- dans lequel la connexion sécurisée entre le au moins un module de marchandises générales (2) et la station d'accueil (16) est libérée ou déconnectée par une authentification pour déconnecter et
- dans lequel, de préférence, l'authentification s'effectue par transmission d'au moins une information d'autorisation d'un coursier, d'un véhicule de coursier (12) et/ou d'une centrale de commande à la station d'accueil (16) et/ou par lecture d'une information d'autorisation d'un coursier et/ou d'un véhicule de coursier (12) et/ou par déverrouillage d'un dispositif de sécurité avec une unité de clé.

6. Procédé selon l'une des revendications 1 à 5,
dans lequel un robot de coursier à conduite autonome est utilisé comme véhicule de coursier (12).

7. Procédé selon l'une des revendications 1 à 6,
dans lequel une station d'accueil (16) ancrée dans le sol de manière fixe, en particulier de manière inamovible et/ou une armoire de marchandises générales (3) ancrée dans le sol, en particulier de manière inamovible, pour recevoir au moins un module de marchandises générales (2) est utilisée comme station d'accueil (16).

8. Procédé selon l'une des revendications 1 à 7,
- dans lequel le au moins un module de marchandises générales (2) est déposé par le drone (10) sur le véhicule de coursier (12) et/ou
- dans lequel un véhicule de coursier (12) passe sous le au moins un module de marchandises générales (2) au lieu de transfert (11).

9. Procédé selon l'une des revendications 1 à 8,
- dans lequel le module de marchandises générales (2)est une, en particulier intégrante, partie d'une armoire de marchandises générales (3) et
- dans lequel l'armoire de marchandises générales (3) est transportée par voie aérienne à l'aide d'un drone (10) d'une base de distribution à un lieu de transfert (11) et/ou inversement,
- dans lequel l'armoire de marchandises générales (3) est transportée par un véhicule de coursier (12) du lieu de transfert (11) au lieu d'enlèvement (15) et/ou inversement et
- dans lequel l'armoire pour colis (3) est fixée de manière imperdable à une station d'accueil (16) au lieu d'enlèvement (15) et/ou est séparée de la station d'accueil, connectée à l'armoire de marchandises générales (3) par une liaison sécurisée.
